# EUROPEAN PATENT APPLICATION

(11) **EP 4 350 824 A1**
(43) Date of publication of application: **10.04.2024**
(21) Application number: 23197099.7
(22) Date of filing: 13.09.2023
(51) Int. Cl.: H01M 10/04, H01M 10/0587

(54) **BATTERY**

(30) Priority: 04.10.2022 JP 2022160485
(71) Applicant: Prime Planet Energy & Solutions, Inc., Chuo-ku Tokyo 103-0022 (JP)
(72) Inventor: MAEDA, Tomonori, Tokyo, 103-0022 (JP)
(74) Representative: Kuhnen & Wacker Patent- und Rechtsanwaltsbüro PartG mbB

(57) **Abstract**

Regarding a herein disclosed battery 100, a wound electrode assembly 20 includes a first bent area 20n arranged at one end part side, and a second bent area 20r₂ arranged at the other end part side. In a case where, regarding a cross section view of the wound electrode assembly 20 cut in a direction orthogonal to a wound axis WL, a straight line extending in a direction perpendicular to a thickness direction reaching from one flat surface 20fi to the other flat surface 20f₂ through the wound axis WL is treated as a straight line A, the first bent area 20n includes a first area 20r₁ₐ positioned at one side more than the straight line A in the wound electrode assembly 20, a winding-end end part 22e of the positive electrode and a winding-end end part 24e of the negative electrode are positioned on the first area 20r₁ₐ, and a winding-end end part 70Ae of the first separator positioned on the outermost surface of the wound electrode assembly 20 is positioned on the second bent area 20r₂.

## Description

### BACKGROUND OF THE DISCLOSURE

### 1. Technical Field

The present disclosure relates to a battery.

### 2. Description of Background

For example, Japanese Patent Application Publication No. 2022-74818 discloses a battery including a wound electrode assembly that is configured by laminating a positive electrode formed in a strip-like shape and a negative electrode formed in a strip-like shape via a separator formed in a strip-like shape and by winding the resultant with treating a wound axis as the center.

### SUMMARY

Anyway, based on an examination of the present inventor, it has been understood that still there is a room from a perspective of enhancing a battery performance for improving the battery including the wound electrode assembly as described above.

A herein disclosed battery is a battery including a flat-shaped wound electrode assembly in which a positive electrode formed in a strip-like shape and a negative electrode formed in a strip-like shape are wound via a separator formed in a strip-like shape. The wound electrode assembly includes a first bent area arranged at one end part side and a second bent area arranged at the other end part side. In a case where, regarding a cross section view of the wound electrode assembly cut in a direction orthogonal to a wound axis, a straight line extending in a direction perpendicular to a thickness direction reaching from one flat surface to the other flat surface through the wound axis is treated as a straight line A, the first bent area includes a first area positioned at one side more than the straight line A in the wound electrode assembly, a winding-end end part of the positive electrode and a winding-end end part of the negative electrode are positioned on the first area. At least a winding-end end part of the separator positioned on the outermost surface of the wound electrode assembly is positioned on the second bent area. According to the battery including the above described configuration, it is possible to suitably implement enhancing the battery performance.

### BRIEF DESCRIPTION OF THE DRAWINGS

FIG. 1 is a perspective view that schematically shows a battery in accordance with one embodiment.
FIG. 2 is a longitudinal cross section view that is schematically shown along a II-II line of FIG. 1.
FIG. 3 is a lateral cross section view that is schematically shown along a III-III line of FIG. 1.
FIG. 4 is a longitudinal cross section view that is schematically shown along a IV-IV line of FIG. 2.
FIG. 5 is a schematic view that shows a configuration of a wound electrode assembly in accordance with one embodiment.
FIG. 6 is a schematic view that shows the wound electrode assembly in accordance with one embodiment.
FIG. 7 is an enlarged view that schematically shows an interface between a positive electrode, a negative electrode, and a separator in accordance with one embodiment.
FIG. 8 is a schematic view that shows a configuration of a cross section of the wound electrode assembly of FIG. 3.
FIG. 9 is an explanation view that is for explaining a vicinity of a winding-start end part of a positive electrode and a vicinity of a winding-start end part of a negative electrode in FIG. 8.
FIG. 10 is an explanation view that is for explaining a first bent area and a second bent area in FIG. 8.

### DETAILED DESCRIPTION

Below, while referring to drawings, some of preferred embodiments for a herein disclosed technique will be explained. Incidentally, the matters other than matters particularly mentioned in this specification, and required for practicing the present disclosure (for example, a general configuration and manufacturing process for the battery by which the present disclosure is not characterized) can be grasped as design matters of those skilled in the art based on the conventional technique in the present field. The present disclosure can be executed based on the contents disclosed in the present specification, and the technical common sense in the present field. In addition, it is not intended, of course, that embodiments explained here particularly restricts the present disclosure. In addition, a wording "A to B" representing a range in the present specification semantically covers not only a meaning equal to or more than A and not more than B, but also meanings "more than A" and "less than B".

Incidentally, in the present specification, the "battery" is a term widely denoting an electric storage device from which an electric energy can be taken out, and is a concept containing the primary battery and the secondary battery. In addition, in the present specification, the "secondary battery" represents a general electric storage device that can be repeatedly charged and discharged by making charge carriers move between a positive electrode and a negative electrode via an electrolyte. The electrolyte might be a liquid-type electrolyte (electrolytic solution), gel-type electrolyte, or a solid-type electrolyte. The secondary battery described above semantically covers not only a so-called storage battery (chemical battery), such as lithium ion secondary battery and nickel hydrogen battery, but also a capacitor (physical battery), such as electric double layer capacitor, or the like. Below, embodiments will be described in a case where the lithium ion secondary battery is treated as a target.

### <Configuration of Battery>

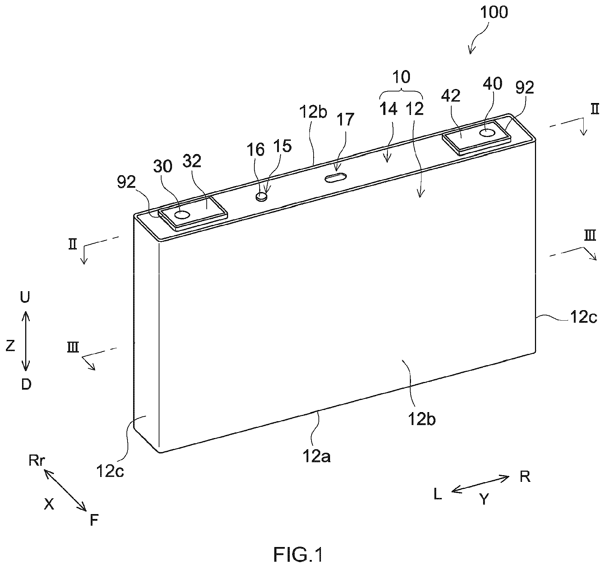

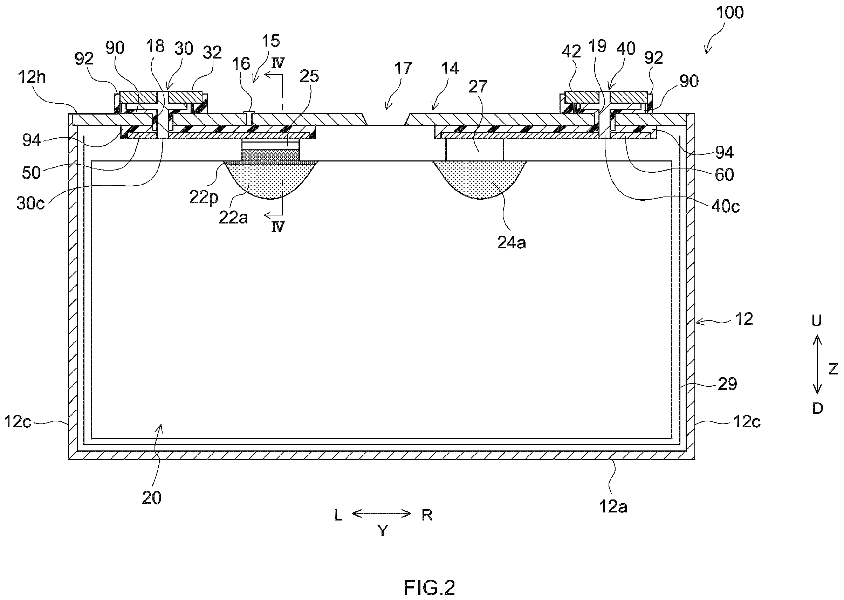

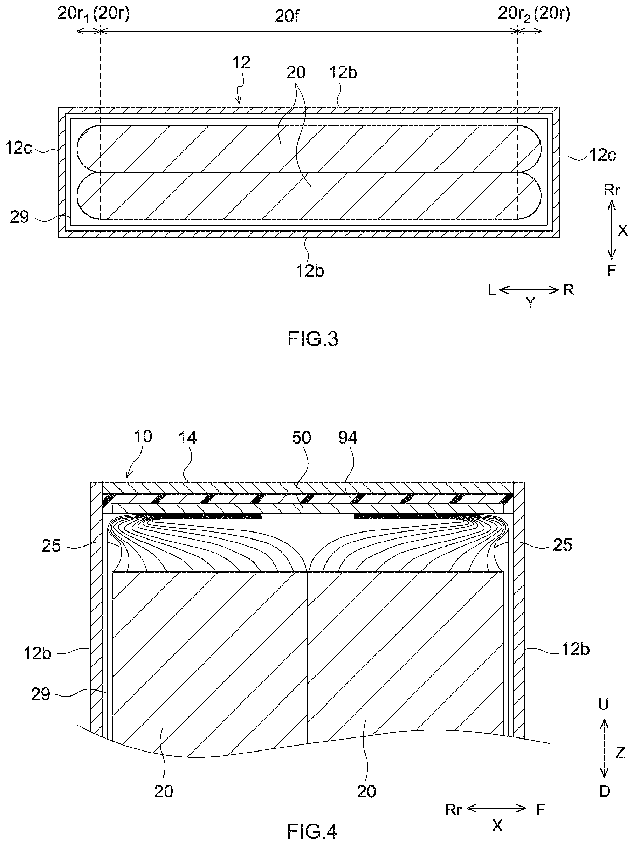

FIG. 1 is a perspective view that schematically shows a battery 100 in accordance with the present embodiment. It is preferable that the battery 100 is a secondary battery, and it is further preferable that the battery is, for example, a nonaqueous electrolyte secondary battery, such as lithium ion secondary battery. FIG. 2 is a longitudinal cross section view that is schematically shown along a II-II line of FIG. 1. FIG. 3 is a lateral cross section view that is schematically shown along a III-III line of FIG. 1. FIG. 4 is a longitudinal cross section view that is schematically shown along a IV-IV line of FIG. 2. Incidentally, in explanation described below, reference signs L, R, F, Rr, U, and D in figures respectively represent left, right, front, rear, up, and down. In addition, a reference sign X in the figures represents a short side direction of the battery 100, a reference sign Y represents a long side direction of the battery 100, and a reference sign Z represents a vertical direction of the battery 100. However, these are merely directions for convenience sake of explanation, which never restrict the disposed form of the battery 100.

As shown in FIG. 1 to FIG. 3, the battery 100 includes a battery case 10 (see FIG. 1), plural wound electrode assemblies 20 (see FIG. 2, and FIG. 3), a positive electrode terminal 30 (see FIG. 1, and FIG. 2), a negative electrode terminal 40 (see FIG. 1, and FIG. 2), a positive electrode collecting member 50 (see FIG. 2), and a negative electrode collecting member 60 (see FIG. 2). As the illustration is omitted, the battery 100 herein further includes an electrolytic solution. The battery 100 is a nonaqueous electrolytic solution secondary battery. Below, a particular configuration of the battery 100 will be described.

The battery case 10 is a housing configured to accommodate the wound electrode assembly 20. As shown in FIG. 1, the battery case 10 herein has an outer appearance that is formed in a flat and bottomed rectangular parallelepiped shape (square shape). However, in another embodiment, the outer appearance of the battery case 10 might be a different shape, such as cylindrical shape. In addition, it is possible as the housing to use a laminate type case. As shown in FIG. 2, the battery case 10 includes an outer package 12 having an opening 12h and includes a sealing plate (lid body) 14 configured to seal the opening 12h. A material of the battery case 10 (outer package 12 and sealing plate 14) might be the same as a material conventionally used, and is not particularly restricted. It is preferable that the battery case 10 is made of metal, and it is more preferable that, for example, the battery case is made of aluminum, aluminum alloy, iron, iron alloy, or the like. The outer package 12 and the sealing plate 14, which configure the battery case 10, might be made from the same material or might be made respectively from different materials. Each of the outer package 12 and the sealing plate 14 has a volume based on an accommodated number of the wound electrode assemblies 20 (single or plural. Here, plural), a size, or the like.

The outer package 12 is, as shown in FIG. 1 and FIG. 2, a container that has the opening 12h at the upper surface and that is formed in a bottomed square shape. The outer package 12 includes, as shown in FIG. 1, a bottom wall 12a, a pair of longer side walls 12b extending upward from long sides of the bottom wall 12a and being opposed mutually, and a pair of short side walls 12c extending upward from short sides of the bottom wall 12a and being opposed mutually. The longer side wall 12b and the short side wall 12c are respectively an example of a first side wall disclosed herein and an example of a second side wall disclosed herein. An area size of the longer side wall 12b is larger than an area size of the short side wall 12c. The bottom wall 12a is formed in an approximately rectangular shape. The bottom wall 12a is opposed to the opening 12h (see FIG. 2). The longer side wall 12b and the short side wall 12c are examples of "side wall". The sealing plate 14 is a plate-shaped member formed in a flat surface approximately rectangular shape, which is attached to the outer package 12 so as to cover the opening 12h of the outer package 12. The sealing plate 14 is opposed to the bottom wall 12a of the outer package 12. The sealing plate 14 is formed in an approximately rectangular shape. The battery case 10 is integrated by making the sealing plate 14 be joined (for example, welded and joined) to a peripheral edge of the opening 12h of the outer package 12. By doing this, the battery case 10 is airtightly sealed (hermetically sealed).

As shown in FIG. 2, the sealing plate 14 is provided with a liquid injection hole 15, a gas exhaust valve 17, and terminal taking out holes 18, 19. The liquid injection hole 15 is a penetration hole that is configured for injecting the electrolytic solution to an inside of the battery case 10 after the sealing plate 14 is assembled to the outer package 12. The liquid injection hole 15 is sealed by a sealing member 16 after the liquid injection of the electrolytic solution. The gas exhaust valve 17 is a thin-walled part that is configured to be broken when a pressure inside the battery case 10 becomes equal to or more than a predetermined value and that is configured so as to exhaust the gas inside the battery case 10 to an outside.

As the electrolytic solution, one used for a conventionally known battery can be used without particular restriction. As one example, it is possible to use a nonaqueous electrolytic solution in which a supporting salt is dissolved into a nonaqueous type solvent. As one example of the nonaqueous type solvent, it is possible to use a carbonate type solvent, such as ethylene carbonate, dimethyl carbonate, and ethyl methyl carbonate. As one example of the supporting salt, it is possible to use a fluorine-containing lithium salt, such as LiPF₆. The electrolytic solution might contain an additive agent, as needed.

The positive electrode terminal 30 is attached to one of the end parts (left end part in FIG. 1 and FIG. 2) in a long side direction Y of the sealing plate 14. The negative electrode terminal 40 is attached to the other one of the end parts (right end part in FIG. 1 and FIG. 2) in the long side direction Y of the sealing plate 14. The positive electrode terminal 30 and the negative electrode terminal 40 are respectively inserted into the terminal taking out holes 18, 19 and are configured to be exposed to a surface at an outer side of the sealing plate 14. The positive electrode terminal 30 is electrically connected to a plate-shaped positive electrode outside conductive member 32 at an outer side of the battery case 10. The negative electrode terminal 40 is electrically connected to a plate-shaped negative electrode outside conductive member 42 at the outer side of the battery case 10. The positive electrode outside conductive member 32 and the negative electrode outside conductive member 42 are connected to another secondary battery or an outside equipment via an outside connecting member, such as bus bar. It is preferable that the positive electrode outside conductive member 32 and the negative electrode outside conductive member 42 are configured with a metal outstanding for electrical conductivity, and are configured with, for example, aluminum, aluminum alloy, copper, copper alloy, or the like. However, the positive electrode outside conductive member 32 and the negative electrode outside conductive member 42 are not essential, and might be omitted in another embodiment.

As shown in FIG. 3 and FIG. 4, regarding the battery 100 of the present embodiment, plural (in particular, 2) wound electrode assemblies 20 are accommodated in the battery case 10. However, the number of the wound electrode assemblies arranged inside one outer package 12 is not particularly restricted, and might be equal to or more than 3 (plural), or be 1. Although a particular structure of the wound electrode assembly 20 will be described later, a positive electrode tab group 25 and a negative electrode tab group 27 protrude to an upper part of the wound electrode assembly 20 as shown in FIG. 2. The battery 100 has a so-called upward tab structure in which the positive electrode tab group 25 and the negative electrode tab group 27 position above the wound electrode assembly 20. As shown in FIG. 4, the positive electrode tab group 25 is bent under a state of being joined to the positive electrode collecting member 50. As the illustration is omitted, similarly, the negative electrode tab group 27 is bent under a state of being joined to the negative electrode collecting member 60.

The positive electrode collecting member 50 is configured to electrically connect the positive electrode tab group 25 of the wound electrode assemblies 20 and the positive electrode terminal 30. The positive electrode collecting member 50 is, as shown in FIG. 2, a plate-shaped conductive member that extends in the long side direction Y along an inner side surface of the sealing plate 14. One end part (right side in FIG. 2) of the positive electrode collecting member 50 is electrically connected to the positive electrode tab group 25. The other end part (left side in FIG. 2) of the positive electrode collecting member 50 is electrically connected to a lower end part 30c of the positive electrode terminal 30. It is preferable that the positive electrode terminal 30 and the positive electrode collecting member 50 are configured with a metal outstanding for electrical conductivity, and might be configured with, for example, aluminum or aluminum alloy.

The negative electrode collecting member 60 is configured to electrically connect the negative electrode tab group 27 of the wound electrode assemblies 20 and the negative electrode terminal 40. The negative electrode collecting member 60 is, as shown in FIG. 2, a plate-shaped conductive member that extends in the long side direction Y along the inner side surface of the sealing plate 14. One end part (left side in FIG. 2) of the negative electrode collecting member 60 is electrically connected to the negative electrode tab group 27. The other end part (right side in FIG. 2) of the negative electrode collecting member 60 is electrically connected to a lower end part 40c of the negative electrode terminal 40. It is preferable that the negative electrode terminal 40 and the negative electrode collecting member 60 are configured with a metal outstanding for electrical conductivity, and might be configured with, for example, copper or copper alloy.

Regarding the battery 100, various insulating members are used for inhibiting conduction between the wound electrode assembly 20 and the battery case 10. For example, as shown in FIG. 1, the positive electrode outside conductive member 32 and the negative electrode outside conductive member 42 are insulated by an outside insulating member 92 from the sealing plate 14. In addition, as shown in FIG. 2, each of gaskets 90 is attached to each of the terminal taking out holes 18, 19 of the sealing plate 14. By doing this, it is possible to inhibit the positive electrode terminal 30 and the negative electrode terminal 40, which are inserted into the terminal taking out holes 18, 19, from becoming conductive with the sealing plate 14. In addition, an inside insulating member 94 is arranged between the positive electrode collecting member 50 and negative electrode collecting member 60, and an inner surface side of the sealing plate 14. By doing this, it is possible to inhibit the positive electrode collecting member 50 and the negative electrode collecting member 60 from becoming conductive with the sealing plate 14. Incidentally, the inside insulating member 94 might include a protruding part that is configured to protrude toward the wound electrode assembly 20.

Furthermore, the plural wound electrode assemblies 20 are arranged inside the outer package 12 under a state of being covered with an electrode assembly holder 29 (see FIG. 3) that consists of a resin sheet having an insulating property. By doing this, it is possible to inhibit the wound electrode assembly 20 from directly coming into contact with the outer package 12. Incidentally, a material of each insulating member described above is not particularly restricted, if a predetermined insulating property is implemented. As one example of the above described material, it is possible to use a synthetic resin material that is a polyolefin resin, such as polypropylene (PP) and polyethylene (PE), a fluorine type resin, such as perfluoro alkoxy alkane and polytetrafluoroethylene (PTFE), or the like.

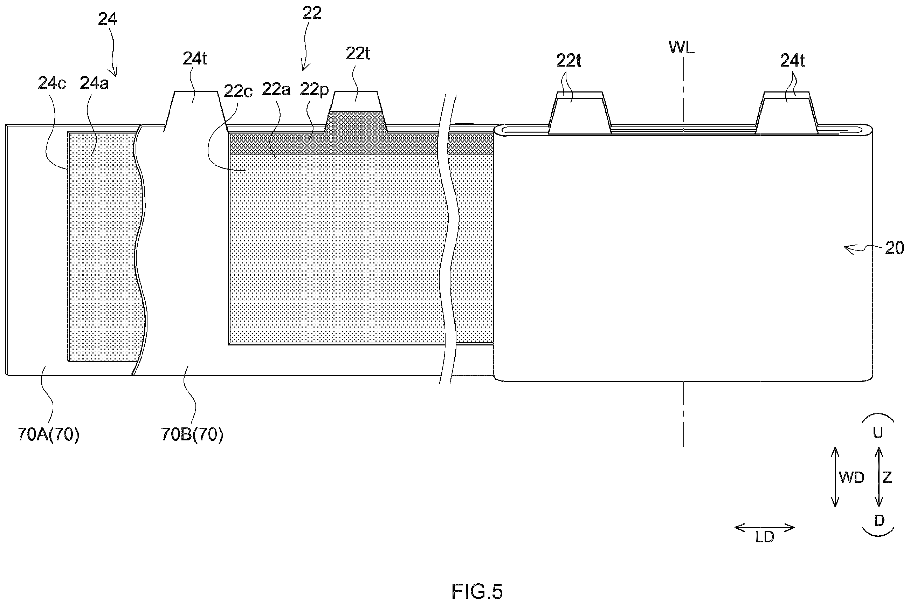

FIG. 5 is a schematic view that shows a configuration of the wound electrode assembly 20. As shown in FIG. 5, the wound electrode assembly 20 is configured by laminating a positive electrode 22 formed in a strip-like shape and a negative electrode 24 formed in a strip-like shape under a state where the positive electrode and the negative electrode are arranged via two separators 70 each formed in a strip-like shape (first separator 70A, and second separator 70B) so as to be insulated, and by winding the resultant in a longitudinal direction with a wound axis WL treated as a center. Incidentally, a reference sign LD in FIG. 5, or the like, represents a longitudinal direction (in other words, carrying direction) of the wound electrode assembly 20 and the separator 70, each of which is manufactured in a strip-like shape. A reference sign WD represents a wound axis direction (which is also referred to as width direction) of the wound electrode assembly 20 and the separator 70, which is a direction approximately orthogonal to the longitudinal direction LD. The wound axis direction WD is approximately parallel to a vertical direction Z of the above described battery 100.

An outer shape of the wound electrode assembly 20 herein is a flat shape. It is preferable that the wound electrode assembly 20 is formed in the flat shape. The wound electrode assembly 20 formed in the flat shape can be made, for example, by performing a press mold on an electrode assembly (cylindrical body) wound in a cylindrical shape so as to make the electrode assembly be flat. The wound electrode assembly 20 formed in the flat shape, as shown in FIG. 3, includes a pair of bent parts (bent areas) 20r, an outer surface of each bent part being bent, and includes a pair of flat parts (flat areas) 20f configured to couple the pair of bent areas 20r, an outer surface of each flat part being flat. The pair of bent areas 20r each includes a first bent area 20n and a second bent area 20r₂.

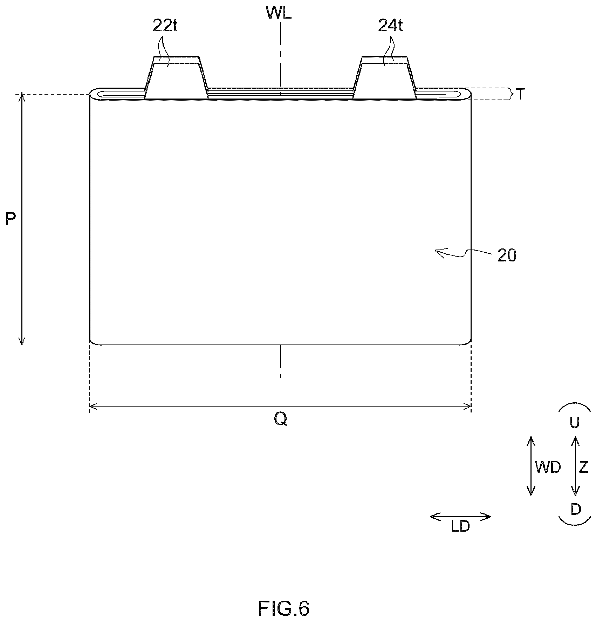

FIG. 6 is a schematic view that shows the wound electrode assembly 20. A reference sign P in FIG. 6 represents a height of the wound electrode assembly 20 (in other words, a length in a direction along the wound axis WL of the wound electrode assembly 20, which is also referred to as a length in a direction connecting the bottom wall 12a of the outer package 12 and the sealing plate 14). In addition, a reference sign Q in FIG. 6 represents a width of the wound electrode assembly 20 (in other words, a length in a direction along a straight line A described later, which is referred to as a length in a direction connecting a pair of short side walls 12c of the outer package 12). Here, a ratio (Q/P) of the width Q of the wound electrode assembly 20 with respect to the height P of the wound electrode assembly 20, which is not particularly restricted if the effects of the technique herein disclosed are implemented, is, for example, equal to or more than 2, or preferably equal to or more than 3 from a perspective of implementing a higher capacity battery, or might be, for example, equal to or more than 4. In addition, an upper limit of the ratio (Q/P), which is not particularly restricted, is, for example, equal to or less than 10, or might be equal to or less than 7, or equal to or less than 5. The height P of the wound electrode assembly 20 is preferably equal to or more than 5 cm, or might be, for example, equal to or more than 10 cm. In addition, the height P of the wound electrode assembly 20 is preferably equal to or less than 20 cm, or further preferably equal to or less than 15 cm. The width Q of the wound electrode assembly 20 is preferably equal to or more than 20 cm, or further preferably equal to or more than 30 cm. In addition, the width Q of the wound electrode assembly 20 might be, for example, equal to or less than 60 cm, might be equal to or less than 50 cm, or might be equal to or less than 40 cm. However, it is not intended that the present disclosure is restricted to these examples.

A reference sign T in FIG. 6 represents a thickness of the wound electrode assembly 20. The thickness T of the wound electrode assembly 20, which is not particularly restricted if the effects of the technique herein disclosed are implemented, is, for example, equal to or more than 5 cm, or preferably equal to or more than 10 cm from a perspective of implementing a higher capacity battery, further preferably equal to or more than 12 cm, or furthermore preferably equal to or more than 15 cm. An upper limit of the thickness T of the wound electrode assembly 20, which is not particularly restricted, might be, for example, equal to or less than 30 cm, might be equal to or less than 25 cm, or might be equal to or less than 20 cm. However, it is not intended that the present disclosure is restricted to these examples.

In the battery 100, the wound electrode assembly 20 is accommodated inside the battery case 10 to make the wound axis direction WD approximately coincide with the vertical direction Z. In other words, the wound electrode assembly 20 is arranged inside the battery case 10, with the wound axis direction WD arranged to be approximately parallel to the longer side wall 12b and the short side wall 12c and arranged to be in a direction approximately orthogonal to the bottom wall 12a and the sealing plate 14. In other words, the wound electrode assembly 20 is arranged inside the battery case 10 with its own wound axis WL arranged to be in a direction perpendicular to the bottom wall 12a. As described above, the configuration of the wound electrode assembly 20 whose upper portion and lower portion are opened can implement faster osmosing the electrolytic solution, and thus it is preferable. In addition, the configuration can make the battery 100 become a high capacity battery, and thus it is preferable. As shown in FIG. 3, the pair of bent parts 20r are arranged to be opposed to the pair of shorter side walls 12c of the outer package 12. The pair of flat parts 20f are arranged to be opposed to longer side walls 12b of the outer package 12. End surfaces (in other words, laminate surfaces in which the positive electrode 22 and the negative electrode 24 are laminated, or opposite ends in the wound axis direction WD of FIG. 5) of the wound electrode assembly 20 are opposed to the bottom wall 12a and the sealing plate 14.

The positive electrode 22 is, as shown in FIG. 5, a member formed in a strip-like shape. The positive electrode 22 includes a positive electrode collecting body 22c formed in a strip-like shape, and a positive electrode active material layer 22a and positive electrode protective layer 22p fixed on at least one surface of the positive electrode collecting body 22c. It is preferable from a perspective of battery performance that the positive electrode active material layer 22a is formed on both surfaces of the positive electrode collecting body 22c.

As each of members configuring the positive electrode 22, it is possible to use a conventionally known material which can be used for a general battery (for example, lithium ion secondary battery), without particular restriction. For example, it is preferable that the positive electrode collecting body 22c is made from an electrically conductive metal, such as aluminum, aluminum alloy, nickel, and stainless steel, and the positive electrode collecting body herein is a metal foil, in particular, an aluminum foil. A thickness of the positive electrode collecting body 22c is preferably 5 µm to 30 µm, or further preferably 8 µm to 25 µm.

The positive electrode 22 includes, as shown in FIG. 5, plural positive electrode tabs 22t that protrude toward an outer side (upper side in FIG. 5) from one end side in the wound axis direction WD. The plural positive electrode tabs 22t are provided to be spaced away from each other by a predetermined interval (intermittently) along the longitudinal direction LD. The positive electrode tab 22t herein is a part of the positive electrode 22. The positive electrode tab 22t is an area where the positive electrode active material layer 22a is not formed. On a part of the positive electrode tab 22t herein, the positive electrode protective layer 22p is provided. However, the positive electrode tab 22t might not be provided with the positive electrode protective layer 22p. On at least a part of the positive electrode tab 22t, the positive electrode collecting body 22c is exposed. The positive electrode tab 22t might be a member different from the positive electrode 22.

The plural positive electrode tabs 22t each is herein formed in a trapezoidal shape. However, a shape of the positive electrode tab 22t is not restricted to that. In addition, sizes of the plural positive electrode tabs 22t are not particularly restricted. The shape or size of the positive electrode tab 22t can be suitably adjusted, for example, in consideration of a state of being connected to the positive electrode collecting member 50, and based on a formed position, or the like. The plural positive electrode tabs 22t are laminated at one of the end parts (top end part in FIG. 5) in the wound axis direction WD of the positive electrode 22, so as to configure the positive electrode tab group 25 (see FIG. 2).

The positive electrode active material layer 22a is, as shown in FIG. 5, provided in a strip-like shape along the longitudinal direction LD of the positive electrode collecting body 22c. A width of the positive electrode active material layer 22a (length in the wound axis direction WD, and this meaning is similarly used, below) is smaller than a width of the negative electrode active material layer 24a. The positive electrode active material layer 22a contains a positive electrode active material that can reversibly store and release a charge carrier. The positive electrode active material is preferably a lithium transition metal composite oxide, or further preferably one containing at least Ni (nickel) or Co (cobalt) even among the lithium transition metal composite oxides. As one example of the lithium transition metal composite oxide described above, it is possible to use a lithium-nickel-cobalt-manganese composite oxide. When a total solid content of the positive electrode active material layer 22a is treated as 100 mass%, the positive electrode active substance might occupy approximately 80 mass% or more, typically 90 mass% or more, or, for example, 95 mass% or more. The positive electrode active material layer 22a might contain an arbitrary component in addition to the positive electrode active material, for example, various additive components, such as binder and electrically conducting material, or the like. It is preferable that the positive electrode active material layer 22a contains the binder and the electrically conducting material, in addition to the positive electrode active material. The binder is, typically, made of resin, and it is preferable to use a fluorine type resin, such as polyvinylidene fluoride (PVdF), even among the resins. As the electrically conducting material, it is preferable to use a carbon material, such as acetylene black (AB).

The positive electrode protective layer 22p is a layer whose electrical conduction property is configured to be lower than the positive electrode active material layer 22a. The positive electrode protective layer 22p is, as shown in FIG. 5, provided in a strip-like shape along the longitudinal direction LD of the positive electrode collecting body 22c. The positive electrode protective layer 22p is provided at a boundary portion between the positive electrode collecting body 22c and the positive electrode active material layer 22a in the wound axis direction WD. The positive electrode protective layer 22p herein is provided at one of the end parts in the wound axis direction WD of the positive electrode collecting body 22c, in particular, an end part at a side where the positive electrode tab 22t exists (top end part in FIG. 5). By including the positive electrode protective layer 22p, it is possible to inhibit the battery 100 from suffering an inside short circuit caused by direct contact of the positive electrode 22 with the negative electrode active material layer 24a when the separator 70 is broken.

The positive electrode protective layer 22p contains an inorganic filler having an insulating property. As one example of the inorganic filler, it is possible to use a ceramic particle, such as alumina. The positive electrode protective layer 22p might contain an arbitrary component in addition to the inorganic filler, for example, various additive components, such as binder and electrically conducting material, or the like. The binder and the electrically conducting material might be the same as those which are illustrated to be able to be contained in the positive electrode active material layer 22a. However, the positive electrode protective layer 22p is not essential, and might be omitted in another embodiment.

The negative electrode 24 is, as shown in FIG. 5, a member formed in a strip-like shape. The negative electrode 24 includes a negative electrode collecting body 24c formed in a strip-like shape, and a negative electrode active material layer 24a fixed on at least one surface of the negative electrode collecting body 24c. It is preferable from a perspective of battery performance that the negative electrode active material layer 24a is formed on both surfaces of the negative electrode collecting body 24c.

As each of members configuring the negative electrode 24, it is possible to use a conventionally known material which can be used for a general battery (for example, lithium ion secondary battery), without particular restriction. For example, it is preferable that the negative electrode collecting body 24c is made from an electrically conductive metal, such as copper, copper alloy, nickel, and stainless steel, and the negative electrode collecting body herein is a metal foil, in particular, a copper foil. A thickness of the negative electrode collecting body 24c is preferably 5 µm to 30 µm, or further preferably 8 µm to 25 µm.

The negative electrode 24 includes, as shown in FIG. 5, negative electrode tabs 24t that protrudes toward the outer side (upper side in FIG. 5) from one end side in the wound axis direction WD. Plural negative electrode tabs 24t are provided to be spaced away from each other by a predetermined interval (intermittently) along the longitudinal direction LD. With respect to the wound axis direction WD, the negative electrode tab 24t is provided on an end part at the same side as the positive electrode tab 22t. The negative electrode tab 24t herein is a part of the negative electrode 24. The negative electrode tab 24t herein is an area where the negative electrode active material layer 24a is not formed, and where the negative electrode collecting body 24c is exposed. However, a part of the negative electrode active material layer 24a might protrude to stick the negative electrode tab 24t. In addition, the negative electrode tab 24t might be a member different from the negative electrode 24.

The plural negative electrode tabs 24t each is herein in a trapezoidal shape. However, each shape and size of plural negative electrode tabs 24t can be suitably adjusted, similarly to the positive electrode tab 22t. The plural negative electrode tabs 24t are laminated at one of the end parts (top end part in FIG. 5) in the wound axis direction WD of the negative electrode 24, so as to configure the negative electrode tab group 27 (see FIG. 2).

The negative electrode active material layer 24a is, as shown in FIG. 5, provided in a strip-like shape along the longitudinal direction LD of the negative electrode collecting body 24c. The width of the negative electrode active material layer 24a is larger than the width of the positive electrode active material layer 22a. Incidentally, the width of the negative electrode active material layer 24a means a length in the wound axis direction WD of a portion whose thickness is approximately constant, and it does not include a portion of the negative electrode tab 24t even in a case where, for example, a part of the negative electrode active material layer 24a protrudes to stick the negative electrode tab 24t. The negative electrode active material layer 24a contains a negative electrode active material that can reversibly store and release a charge carrier. It is preferable that the negative electrode active material is, for example, a carbon material, such as graphite, or a silicon material. When a total solid content of the negative electrode active material layer 24a is treated as 100 mass%, the negative electrode active substance might occupy approximately 80 mass% or more, typically 90 mass% or more, or, for example, 95 mass% or more. The negative electrode active material layer 24a might contain an arbitrary component in addition to the negative electrode active material, for example, various additive components, such as binder and electrically conducting material, or the like. It is preferable that the negative electrode active material layer 24a contains the binder in addition to the negative electrode active material. It is preferable that the binder contains rubbers, such as styrene butadiene rubber (SBR), or celluloses, such as carboxymethyl cellulose (CMC). The negative electrode active material layer 24a might contain a carbon material as the electrically conducting material, if needed.

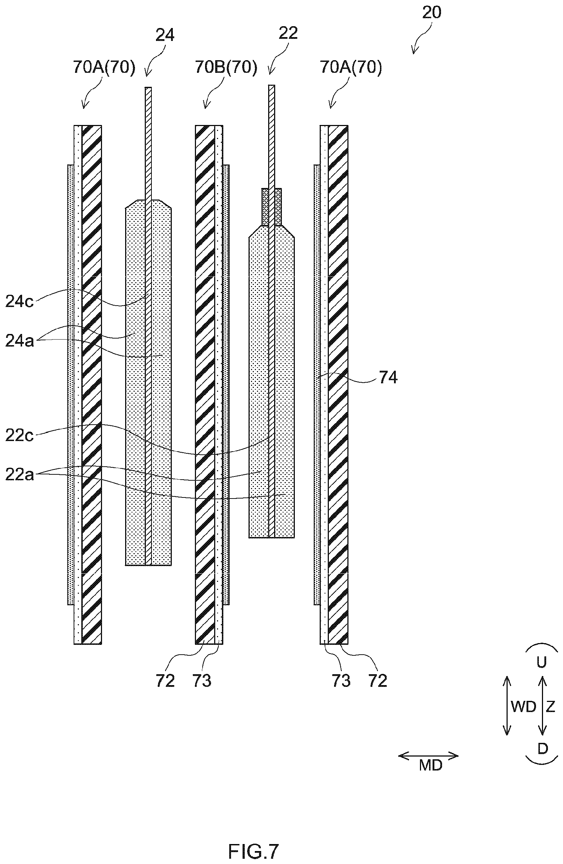

The separator 70 is, as shown in FIG. 5 and FIG. 7, is a member formed in a strip-like shape. The separator 70 is an insulation sheet on which plural fine penetration holes are formed, and charge carriers can pass through the plural fine penetration holes. A width of the separator 70 is larger than the width of the negative electrode active material layer 24a. By arranging the separator 70 between the positive electrode 22 and the negative electrode 24, it is possible to not only inhibit the contact of the positive electrode 22 and the negative electrode 24, but also make the charge carrier (for example, lithium ion) move between the positive electrode 22 and the negative electrode 24. Although not particularly restricted, a thickness of the separator 70 (length in the laminate direction MD, and this meaning is similarly used, below) is preferably equal to or more than 8 µm, or further preferably equal to or more than 10 µm. In addition, the thickness of the separator 70 is preferably equal to or less than 25 µm, further preferably equal to or less than 22 µm, or furthermore preferably equal to or less than 20 µm.

Herein, two separators 70 are used for one wound electrode assembly 20. Regarding the separator 70, it is preferable that two separators are used for one wound electrode assembly 20 as shown in the present embodiment, in other words, it is preferable that the first separator 70A and the second separator 70B are included. Two separators might have configurations different from each other, or might have configurations similar to each other.

As shown in FIG. 7, the separator 70 includes a base material layer 72. As the base material layer 72, it is possible to use a fine porous membrane utilized for a separator of a conventionally known battery, without particular restriction. It is preferable that the base material layer 72 is a porous sheet-shaped member. The base material layer 72 might have a single layer structure, or might have 2 or more layers structure, for example, 3 layers structure. Regarding the base material layer 72, it is preferable that at least a surface opposed to the negative electrode 24 is made from polyolefin resin. Regarding the base material layer 72, it is further preferable that whole of it is made from polyolefin resin. By doing this, it is possible to sufficiently secure a flexibility of the separator 70, and easily perform manufacturing (winding and press molding) of the wound electrode assembly 20. As the polyolefin resin, it is preferable to use polyethylene (PE), polypropylene (PP), or mixture of them, and it is further preferable to be made from PE.

Although not particularly restricted, a thickness of the base material layer 72 (length in the laminate direction MD, and this meaning is similarly used, below) is preferably equal to or more than 3 µm, or further preferably equal to or more than 5 µm. In addition, the thickness of the base material layer 72 is preferably equal to or less than 25 µm, further preferably equal to or less than 18 µm, or furthermore preferably equal to or less than 14 µm. An air permeability of the base material layer 72 is preferably 30 sec/100 cc to 500 sec/100 cc, further preferably 30 sec/100 cc to 300 sec/100 cc, or furthermore preferably 50 sec/100 cc to 200 sec/100 cc. The base material layer 72 might have an adhesive property within an extent which implements adhesion with the negative electrode active material layer 24a, for example, by heating, press molding, or the like.

As shown in FIG. 7, the heat resistant layer 73 is provided on the base material layer 72. It is preferable that the heat resistant layer 73 is formed on the base material layer 72. The heat resistant layer 73 might be provided directly on a surface of the base material layer 72, or might be provided via a different layer on the base material layer 72. However, the heat resistant layer 73 is not essential, and might be omitted in another embodiment. The heat resistant layer 73 herein is provided on a whole surface opposed to the positive electrode 22 of the base material layer 72. By doing this, it is possible to further precisely prevent heat shrinkage of the separator 70, and contribute in enhancing a safety property of the battery 100. The heat resistant layer 73 does not have the adhesive property within the extent which implements adhesion with the positive electrode active material layer 22a, for example, by heating, press molding, or the like. A basis weight of the heat resistant layer 73 herein is homogenous in the longitudinal direction LD of the separator 70 and in the wound axis direction WD. Although not particularly restricted, a thickness of the heat resistant layer 73 (length in the laminate direction MD, and this meaning is similarly used, below) is preferably equal to or more than 0.5 µm, further preferably equal to or more than 1 µm, or furthermore preferably equal to or more than 2 µm. In addition, the thickness of the heat resistant layer 73 is preferably equal to or less than 8 µm, or further preferably equal to or less than 6 µm. It is preferable that the heat resistant layer 73 contains inorganic filler and a heat resistant layer binder.

As the inorganic filler, it is possible to use conventionally known one utilized for this kind of object, without particular restriction use. It is preferable that the inorganic filler contains a ceramic particle having an insulating property. Particularly, in consideration of a heat resistant property, easily available property, or the like, it is preferable to use an inorganic oxide, such as alumina, zirconia, silica, and titania, a metal hydroxide, such as water oxidation aluminum, or a clay mineral, such as boehmite, or further preferable to use alumina or boehmite. In addition, from a perspective of suppressing heat shrinkage of the separator 70, it is preferable to use a chemical compound particularly containing aluminum. A rate of the inorganic filler with respect to a total mass of the heat resistant layer 73 is preferably equal to or more than 85 mass%, or further preferably equal to or more than 90 mass%, or equal to or more than 95 mass%.

As the heat resistant layer binder, it is possible to use conventionally known one utilized for this kind of object, without particular restriction. As a specific example, it is possible to use an acrylic resin, a fluorine type resin, an epoxy type resin, an urethane resin, an ethylene-vinyl acetate resin, or the like. Among them, the acrylic resin is preferable.

As shown in FIG. 7, regarding the present embodiment, the separator 70 (first separator 70A, and second separator 70B) and the positive electrode 22 are adhered by the adhesion layer 74. The adhesion layer 74 herein is formed on a surface of the separator 70. In accordance with such a configuration, the shape of the wound electrode assembly 20 becomes stable (in other words, causing a gap, or the like, in the wound electrode assembly 20 is suitably suppressed), and thus it is preferable. Additionally, in another embodiment, the separator 70 and the negative electrode 24 might be adhered by the adhesion layer 74. Alternatively, the separator 70 and the positive electrode 22 are adhered by the adhesion layer 74 and the separator 70 and the negative electrode 24 might be adhered by the adhesion layer 74. Particularly, in a case where the separator 70 and the positive electrode 22 are adhered by the adhesion layer 74 as shown in the present embodiment, in addition to the above described effect, it is possible to suitably suppress a spring-back of the wound electrode assembly 20 caused by charge and discharge of the battery 100 (in other words, force tending to make the wound electrode assembly 20, having been molded in a flat shape, be restored in a cylindrical shape), and thus it is preferable.

The adhesion layer 74 is provided on a surface opposed to the positive electrode 22, and abut on the positive electrode 22. It is preferable that the adhesion layer 74 is, as shown in FIG. 7, formed on at least a surface at the positive electrode 22 side of the separator 70. By doing this, an effect as described above can be implemented better. The adhesion layer 74 is adhered to the positive electrode 22, for example, by heating, pressing (typically, press molding), or the like. Although not particularly restricted, a thickness of the adhesion layer 74 (length in the laminate direction MD, and this meaning is similarly used, below)is preferably equal to or more than 0.1 µm, further preferably equal to or more than 0.3 µm, or furthermore preferably equal to or more than 0.5 µm. In addition, the thickness of the adhesion layer 74 is preferably equal to or less than 8 µm, or further preferably equal to or less than 5 µm.

The adhesion layer 74 herein is provided on the heat resistant layer 73. It is preferable that the adhesion layer 74 is formed on the heat resistant layer 73. The adhesion layer 74 might be provided directly on a surface of the heat resistant layer 73, or might be provided via a different layer on the heat resistant layer 73. In addition, the adhesion layer 74 is provided directly on a surface of the base material layer 72, or might be provided via a different layer from the heat resistant layer 73 on the base material layer 72. A configuration of the adhesion layer 74 is not particularly restricted, and might be similar to a conventionally known one. The adhesion layer 74 has an affinity for the electrolytic solution which is relatively higher, for example, in comparison with the heat resistant layer 73, and might be a layer swelling by absorbing the electrolytic solution. The adhesion layer 74 includes an adhesion layer binder.

As the adhesion layer binder, a conventionally known resin material having a constant viscosity for the positive electrode 22 can be used without particular restriction. As a specific example, it is possible to use a cellulose type resin, such as acrylic resin, fluorine type resin, epoxy type resin, urethane resin, ethylene-vinyl acetate resin, polyallylamine (PAA) resin, and carboxymethyl cellulose (CMC), or the like. Among them, the fluorine type resin and the acrylic resin are preferable, because they have high flexibilities and can further suitably induce the adhesive property with respect to the positive electrode 22. As the fluorine type resin, it is possible to use polyvinylidene fluoride (PVdF), polytetrafluoroethylene (PTFE), or the like. The type of the adhesion layer binder might be the same as the heat resistant layer binder, or might be different from the heat resistant layer binder. A rate of the heat resistant layer binder with respect to the total mass of the adhesion layer 74 is preferably equal to or more than 20 mass%, or is further preferably equal to or more than 50 mass%, or equal to or more than 70 mass%. By doing this, it is possible not only to precisely implement a predetermined adhesive property with respect to the positive electrode 22, but also to make the separator 70 become easily deformed by press molding.

The adhesion layer 74 might contain, in addition to the adhesion layer binder, another material (for example, inorganic filler, or the like, which are described as a component of the heat resistant layer 73). In a case where the adhesion layer 74 contains an inorganic filler, the rate of the inorganic filler with respect to the total mass of the adhesion layer 74 is preferably equal to or less than 80 mass%, further preferably equal to or less than 50 mass%, or furthermore preferably equal to or less than 30 mass%.

Although not particularly restricted, the basis weight of the adhesion layer 74 is preferably 0.005 g/m² to 1.0 g/m², or further preferably 0.02 g/m² to 0.06 g/m². Here, the basis weight (loaded volume) of the adhesion layer 74 means a value of the adhesion layer mass divided by an area size of a formation area (mass of adhesion layer/area size of formation area).

The adhesion layer 74 might be formed on a whole surface, or might have a predetermined pattern. For example, the adhesion layer, in a plane view, might have a pattern, such as dot type, stripe type, wave type, strip-like type (striated type), broken line type, and combination of them.

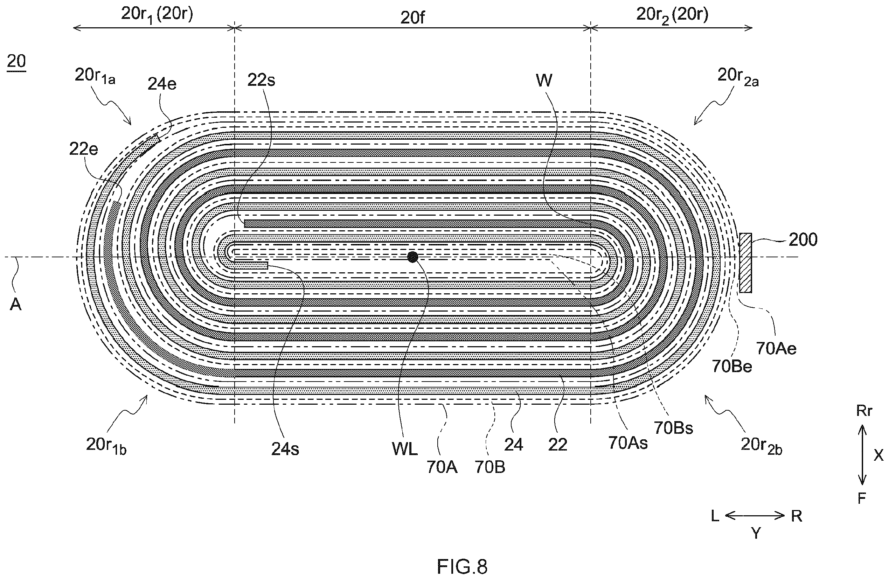

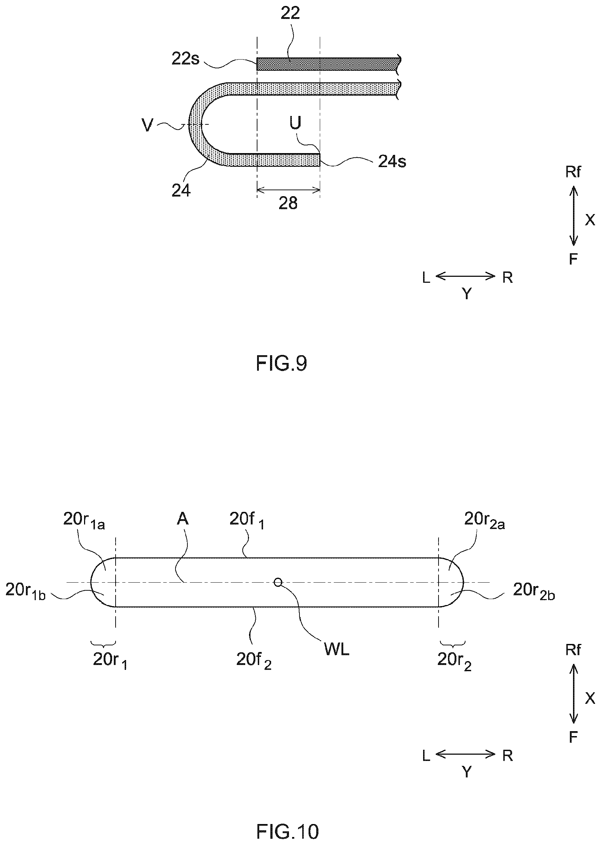

Next, a wound aspect of the wound electrode assembly 20 in accordance with the present embodiment will be described. FIG. 8 is a schematic view that shows a configuration of a cross section of the wound electrode assembly 20 shown in FIG. 3. Incidentally, in FIG. 8, for convenience sake, a hatching for a cross section of each member is omitted. FIG. 9 is an explanation view that is for explaining a winding-start end part 22s vicinity of the positive electrode and a winding-start end part 24s vicinity of the negative electrode in FIG. 8. Incidentally, in FIG. 9, for convenience sake, a figure of the first separator 70A and a figure of the second separator 70B are omitted. FIG. 10 is an explanation view that is for explaining the first bent area 20n and the second bent area 20r₂ shown in FIG. 8. It is possible to say that FIG. 8 and FIG. 10 each is a cross section view of the wound electrode assembly 20 cut in a direction orthogonal to the wound axis WL.

As shown in FIG. 8, the wound electrode assembly 20 is a flat wound electrode assembly in which the positive electrode 22 formed in a strip-like shape and the negative electrode 24 formed in a strip-like shape are wound via the separator 70 formed in a strip-like shape (first separator 70A, and second separator 70B). In addition, as shown in FIG. 10, the wound electrode assembly 20 includes a first bent area 20n arranged at one end part side (left side in FIG. 10) and a second bent area 20r₂ arranged at the other end part side (right side in FIG. 10). Then, as shown in FIG. 10, the first bent area 20n includes a first area 20r₁ₐ positioned at one side (upper side in FIG. 10) more than a straight line A in the wound electrode assembly 20. Incidentally, the straight line A indicates, in a cross section view of the wound electrode assembly 20 cut in a direction orthogonal to the wound axis WL, a straight line that extends in a direction perpendicular to a thickness direction (direction X in FIG. 10) directed from one flat surface 20fi through the wound axis WL to the other flat surface 20f₂. In other words, it is possible to understand that the straight line A is a straight line connecting an apex of an outer surface of the first bent area 20n and an apex of an outer surface of the second bent area 20r₂. In addition, as shown in FIG. 8, on the wound electrode assembly 20, a winding-end end part 22e of the positive electrode and a winding-end end part 24e of the negative electrode are positioned at the first area 20r₁ₐ. Then, at least, a winding-end end part 70Ae of a separator (here, first separator 70A) positioning at the outermost surface of the wound electrode assembly 20 is positioned at the second bent area 20r₂.

Incidentally, a reference sign 20r_{1b} in FIG. 10 represents a second area positioned at the other side (lower side in FIG. 10) more than the straight line A on the first bent area 20ᵣ₁. In addition, a reference sign 20r₂ₐ represents a first area positioned at one side (upper side in FIG. 10) more than the straight line A on the second bent area 20r₂. Then, a reference sign 20r_{2b} represents the second area positioned at the other side (lower side in FIG. 10) more than the straight line A on the second bent area 20r₂.

For example, in a case of a wound electrode assembly in which the winding-end end part of the separator is arranged on a flat area, a portion exists on which pressure is not applied when the battery is arranged on a flat area and restricted, and there is a possibility that Li (lithium) is precipitated at that portion. In addition, by causing the pressure applied ununiformly on the wound electrode assembly, a gas accumulation is caused inside the wound electrode assembly, and thus there is a possibility that Li is precipitated by that issue. On the other hand, regarding the wound electrode assembly 20 in accordance with the present disclosure, the winding-end end part 22e of the positive electrode and the winding-end end part 24e of the negative electrode are arranged on the first bent area 20n (for more details, the first area 20r₁ₐ on the first bent area 20ri), and the winding-end end part 70Ae of the first separator is arranged on the second bent area 20r₂. In other words, it is possible to suppress causing a step on the outer surface of the wound electrode assembly 20. By doing this, it is possible to make the pressure applied on the wound electrode assembly 20 be uniform, and thus, by suppressing the gap from being caused at the end part and by suppressing the gas accumulation from being generated, it is possible to suitably suppress the Li precipitation. Therefore, according to the herein disclosed technique, it is possible to obtain the battery whose battery performance (for more details, Li precipitation resistant property) is suitably enhanced.

As described above, on the herein disclosed battery, it is enough at least that the winding-end end part 70Ae of the separator (here, first separator 70A) positioned on the outermost surface of the wound electrode assembly 20 is positioned on the second bent area 20r₂. Incidentally, as shown in FIG. 8, in the present embodiment, the winding-end end part 70Ae of the first separator is arranged at the second area 20r_{2b} on the second bent area 20r₂. However, in another embodiment, from a perspective of cost reduction or the like, the winding-end end part 70Ae of the first separator might be arranged at the first area 20r₂ₐ on the second bent area 20r₂.

As shown in FIG. 8, in the present embodiment, a winding-end end part 70Be of the second separator is arranged at the second area 20r_{2b} on the second bent area 20r₂. However, in another embodiment, the winding-end end part 70Be of the second separator might be arranged at the first area 20r₂ₐ on the second bent area 20r₂. Alternatively, the winding-end end part 70Be of the second separator might be arranged at an area of the wound electrode assembly 20 other than the second bent area 20r₂ (for example, first bent area 20n or flat area 20f). Incidentally, from a perspective of making the pressure applied on the wound electrode assembly 20 be uniform and of more suitably enhancing the Li precipitation resistant property, it is preferable that the winding-end end part 70Be of the second separator is arranged at the first bent area 20n or the second bent area 20r₂. In addition, it is further preferable that the winding-end end part 70Be of the second separator is arranged at the second bent area 20r₂.

As shown in FIG. 8, in the present embodiment, a winding-start end part 70As of the first separator and a winding-start end part 70Bs of the second separator are arranged at the second bent area 20r₂ side more than the wound axis WL. However, in another embodiment, they might be arranged at the first bent area 20n side more than the wound axis WL. Incidentally, from a perspective of more properly inhibiting the pressure from being partially applied on the flat area 20f and of more suitably enhancing the Li precipitation resistant property, the former is further preferable.

As shown in FIG. 9, in the present embodiment, the winding-start end part 22s of the positive electrode has a winding-start area and the winding-start end part 24s of the negative electrode has a folding area (portion between U-V in FIG. 9). Here, the winding-start area is, when a distance from the winding-start end part 22s of the positive electrode to an end point (see W in FIG. 8) of the flat area 20f of the positive electrode 22 positioned as a first layer is treated as 100%, an area within, for example, 5% from the winding-start end part 22s of the positive electrode, or might be an area within 10%. It can be understood that the folding area described above is an area from the winding-start end part 24s of the negative electrode to a first turn portion (in other words, apex of the bent area). In addition, the wound electrode assembly 20 has an area where the winding-start area of the positive electrode 22 and the folding area of the negative electrode 24 are overlapped in the thickness direction of the wound electrode assembly 20 (X direction in FIG. 9). In accordance with such a configuration, it becomes difficult to cause the gap (step) inside the wound electrode assembly 20. By doing this, it is possible to properly inhibit the pressure from being partially applied on the flat area 20f, and thus, it is possible to further suitably enhance the Li precipitation resistant property. In addition, a length of the area (overlap area 28 in FIG. 9), in which the winding-start area of the positive electrode 22 and the folding area of the negative electrode 24 are overlapped, in the long side direction Y is, from a perspective of suitably implementing the above described effect, preferably equal to or more than 0.5 mm or further preferably equal to or more than 1 mm, or might be, for example, equal to or more than 3 mm. In addition, from a similar perspective, an upper limit of the length in the long side direction Y of the overlap area 28 is preferably equal to or less than 10 mm, or further preferably equal to or less than 7 mm, or might be, for example, equal to or less than 5 mm. However, it is not intended that the present disclosure is restricted to them.

Incidentally, as shown in the present embodiment, regarding the battery 100 including plural wound electrode assemblies 20, it is preferable that lengths of overlap areas 28 in the long side direction Y of the respective wound electrode assemblies 20 are different from each other. By doing this, when all of the plural wound electrode assemblies 20 are pressurized from an outer side of the battery case 10, it is possible to contribute in making surface pressure distribution be uniform on the flat area 20f of each wound electrode assembly 20, and thus it is possible to properly enhance the Li precipitation resistant property on the whole surface of the flat area 20f.

As described above, in the herein disclosed technique, it is enough for the winding-end end part 22e of the positive electrode and the winding-end end part 24e of the negative electrode if they are positioned on the first area 20r₁ₐ. Additionally, in one aspect, on the first area 20r₁ₐ, the winding-end end part 22e of the positive electrode is arranged at an area within 45° with respect to the straight line A treated as the starting-end (for example, area within 30°), and the winding-end end part 24e of the negative electrode is arranged at an area within 45° to 90° with respect to the straight line A treated as the starting-end (for example, area within 60° to 90°). As described above, by making the negative electrode 24 be longer than the positive electrode 22 and by sufficiently securing a storage performance for the charge carrier at the negative electrode 24 side, it is possible to further effectively enhance the Li precipitation resistant property.

As shown in FIG. 8, regarding the present embodiment, the winding-start end part 22s of the positive electrode and the winding-start end part 24s of the negative electrode are arranged at the first bent area 20n side more than the wound axis WL. However, in another embodiment, they might be arranged at the second bent area 20r₂ side more than the wound axis WL. Incidentally, from a perspective of further properly inhibiting the pressure from being partially applied on the flat area 20f and of further suitably enhancing the Li precipitation resistant property, the former case is further preferable.

As shown in FIG. 8, regarding the present embodiment, a winding-end tape 200 is arranged at the winding-end end part of the separator (here, winding-end end part 70Ae of the first separator). In addition, the winding-end tape 200 is arranged on the straight line A. In accordance with such a configuration, from a perspective of further properly inhibiting the pressure from being partially applied on the flat area 20f and of further suitably enhancing the Li precipitation resistant property, it is preferable. Incidentally, as the winding-end tape 200, it is possible to use a winding-end tape used for this type of battery, without particular restriction.

As shown in FIG. 8, regarding the present embodiment, the winding-end tape 200 is arranged to be accommodated in the second bent area 20r₂. However, in another embodiment, the winding-end tape 200 might be arranged over the flat area 20f. Incidentally, from a perspective of further properly inhibiting the pressure from being partially applied on the flat area 20f and of further suitably enhancing the Li precipitation resistant property, the former case is further preferable.

### <Manufacturing method for battery>

Next, a manufacturing method for the battery 100 will be described. Regarding a manufacture for the wound electrode assembly 20, at first, the first separator 70A, the positive electrode 22, the second separator 70B, and the negative electrode 24 are prepared. In the present embodiment, the adhesion layer 74 is imparted on an area opposed to the positive electrode 22 of the first separator 70A, and the adhesion layer 74 is imparted on an area opposed to the positive electrode 22 of the second separator 70B. Incidentally, it is preferable that the adhesion layer 74 is, in a plane view, formed in a dot-like shape, a stripe-like shape, a wave-like shape, a strip-like shape (striated type shape), a broken-line-like shape, or a shape of these combinations, or the like. By doing this, it is possible to suitably enhance an impregnation property regarding the electrolytic solution to the inside of the wound electrode assembly 20. Incidentally, a wording "formation area is formed in a line-like shape" means to be a line-like shape as the formation area, and then means that the adhesion layer itself might be formed in a dot-like shape, or the like. Then, a winding roller is used to wind each of members. After that, by pressing a wound body with a predetermined pressure and by imparting the winding-end tape 200 onto the winding-end end part 70Ae of the first separator, it is possible to obtain the wound electrode assembly 20. Two of wound electrode assemblies 20 described above are prepared, these are inserted into the outer package 12 in a state of being joined to the electrode collecting member on which an electrode tab group is attached to the sealing plate 14, and then the outer package 12 and the sealing plate 14 are joined (welded), so as to construct the battery case 10. Then, the electrolyte is injected from the liquid injection hole 15 of the sealing plate 14 to an inside of the battery case 10, and then the liquid injection hole 15 is covered with the sealing member 16. As described above, it is possible to manufacture the battery 100.

Although the battery 100 can be used for various purposes, it can be suitably used, for example, as a power source for motor (power supply for driving) mounted on a vehicle, such as passenger car and truck. Although a type of the vehicle is not particularly restricted, it is possible to use, for example, a plug-in hybrid vehicle (PHEV; Plug-in Hybrid Electric Vehicle), a hybrid vehicle (HEV; Hybrid Electric Vehicle), an electric vehicle (BEV; Battery Electric Vehicle), or the like.

Above, some embodiments of the present disclosure are explained, but the above described embodiments are merely examples. The present disclosure can be implemented in various other forms. The present disclosure can be executed based on the contents disclosed in the present specification, and based on the technical common sense in the present field. The technique recited in the appended claims includes variously deformed or changed versions of the embodiments that have been illustrated above. For example, one part of the above described embodiment can be replaced with another deformed aspect, and furthermore another deformed aspect can be added to the above described embodiment. In addition, unless a technical feature is explained to be essential, this technical feature can be appropriately deleted.

For example, in the above described embodiment, with respect to the wound axis direction WD, the positive electrode tab 22t and the negative electrode tab 24t are provided on the end parts at the same side, but the present disclosure is not restricted to this example. The herein disclosed technique can be applied to a battery including a wound electrode assembly in which the positive electrode tab and the negative electrode tab are provided on the end parts at the different sides from each other with respect to the wound axis direction WD. Alternatively, the herein disclosed technique can be applied to a battery including a wound electrode assembly that includes none of electrode tabs.

For example, in the embodiment, the adhesion layer 74 is formed on the surfaces of the first separator 70A and the second separator 70B, but the present disclosure is not restricted to this example. For example, the adhesion layer 74 might be formed on the surface of the positive electrode 22. Here, the wording "surface of the positive electrode sheet" might mean a surface of the positive electrode active material layer 22a or a surface of the positive electrode collecting body 22c. In a case where the adhesion layer 74 is provided on the surface of the positive electrode sheet 22, it is preferable that the positive electrode sheet 22 includes the positive electrode active material layer 22a on both surfaces of the positive electrode collecting body 22c, and that the adhesion layer 74 is provided on the surface of the positive electrode active material layer 22a.

For example, in the embodiment, the winding-end tape is imparted on the winding-end end part of the separator positioned at the outermost surface of the wound electrode assembly, but the present disclosure is not restricted to this. The herein disclosed technique can be applied to a battery on which the winding-end tape is not imparted. In that case, it is preferable that the adhesion layer is formed on an inner side surface at the winding-end end part vicinity of the separator positioned on the outermost surface of the wound electrode assembly. By doing this, it is possible to suitably fix the winding-end end part of the separator onto the outermost surface of the wound electrode assembly.

As described above, regarding particular aspects of the herein disclosed technique, it is possible to recite each of items described below.

Item 1: A battery, comprising a flat-shaped wound electrode assembly in which a positive electrode formed in a strip-like shape and a negative electrode formed in a strip-like shape are wound via a separator formed in a strip-like shape, wherein the wound electrode assembly comprises a first bent area arranged at one end part side and a second bent area arranged at the other end part side, in a case where, regarding a cross section view of the wound electrode assembly cut in a direction orthogonal to a wound axis, a straight line extending in a direction perpendicular to a thickness direction reaching from one flat surface to the other flat surface through the wound axis is treated as a straight line A, the first bent area comprises a first area positioned at one side more than the straight line A in the wound electrode assembly, a winding-end end part of the positive electrode and a winding-end end part of the negative electrode are positioned on the first area, and at least a winding-end end part of the separator positioned on the outermost surface of the wound electrode assembly is positioned on the second bent area.

Item 2: The battery described in item 1, further comprising a battery case that is configured to accommodate the wound electrode assembly, wherein the battery case comprises an outer package comprising a bottom wall, a pair of first side walls, a pair of second side walls, and an opening, and comprises a sealing plate configured to seal the opening, and the wound electrode assembly is arranged inside the battery case so as to make the wound axis of the wound electrode assembly be in a direction perpendicular to the bottom wall.

Item 3: The battery described in item 1 or item 2, wherein the separator and at least one of the positive electrode and the negative electrode are adhered with an adhesion layer .

Item 4: The battery described in any one of item 1 to item 3, wherein a length in a direction along the straight line A of the wound electrode assembly is 3 times of more than a length in a direction along the wound axis of the wound electrode assembly.

Item 5: The battery described in any one of item 1 to item 4, wherein a thickness of the wound electrode assembly is equal to or more than 10 cm.

Item 6: The battery described in any one of item 1 to item 5, wherein a winding-start end part of the positive electrode comprises a winding-start end part area, a winding-start end part of the negative electrode comprises a folding area, and in the thickness direction of the wound electrode assembly, the winding-start area and the folding area are overlapped.

Item 7: The battery described in any one of item 1 to item 6, wherein a winding-end tape is arranged at the winding-end end part of the separator, and the winding-end tape is arranged on the straight line A.

## Claims

1. A battery (100) comprising a flat-shaped wound electrode assembly (20) in which positive electrode (22) formed in a strip-like shape and a negative electrode (24) formed in a strip-like shape are wound via a separator (70) formed in a strip-like shape, **characterized in that**,
the wound electrode assembly (20) comprises a first bent area (20r1) arranged at one end part side and a second bent area (20r2) arranged at the other end part side,
in a case where, regarding a cross section view of the wound electrode assembly (20) cut in a direction orthogonal to a wound axis, a straight line extending in a direction perpendicular to a thickness direction reaching from one flat surface (20f1) to the other flat surface (20f2) through the wound axis is treated as a straight line A,
the first bent area (20r1) comprises a first area (20r1a) positioned at one side more than the straight line A in the wound electrode assembly (20),
a winding-end end part (22e) of the positive electrode and a winding-end end part (24e) of the negative electrode are positioned on the first area (20r1a), and
at least a winding-end end part (70Ae) of the separator positioned on the outermost surface of the wound electrode assembly is positioned on the second bent area (20r2).

2. The battery according to claim 1, further comprising:
a battery case (10) that is configured to accommodate the wound electrode assembly (20), wherein
the battery case (10) comprises an outer package (12) comprising a bottom wall (12a), a pair of first side walls (12b), a pair of second side walls (12c) and an opening, and comprises a sealing plate (14) configured to seal the opening, and
the wound electrode assembly (20) is arranged inside the battery case (10) so as to make the wound axis of the wound electrode assembly (20) be in a direction perpendicular to the bottom wall (12a).

3. The battery according to claim 1 or 2, wherein
the separator (70) and at least one of the positive electrode (20) and the negative electrode (24) are adhered with an adhesion layer.

4. The battery according to any one of claims 1 to 3, wherein
a length in a direction along the straight line A of the wound electrode assembly (20) is 3 times or more than a length in a direction along the wound axis of the wound electrode assembly (20).

5. The battery according to any one of claims 1 to 4, wherein
a thickness of the wound electrode assembly (20) is equal to or more than 10 cm.

6. The battery according to any one of claims 1 to 5, wherein
a winding-start end part (22s) of the positive electrode comprises a winding-start end part area,
a winding-start end part (24s) of the negative electrode comprises a folding area, and
in the thickness direction of the wound electrode assembly (20), the winding-start area and the folding area are overlapped.

7. The battery according to any one of claims 1 to 6, wherein
a winding-end tape (200) is arranged at the winding-end end part (70Ae) of the separator (70), and
the winding-end tape (200) is arranged on the straight line A.
